Europäisches Patentamt

European Patent Office

Office européen des brevets

(11) Publication number: **0 420 392 A2**

# EUROPEAN PATENT APPLICATION

(21) Application number: 90307457.3

(51) Int. Cl.⁵: **F16H 57/00**

(22) Date of filing: 09.07.90

(30) Priority: 21.09.89 US 410368

(43) Date of publication of application:
03.04.91 Bulletin 91/14

(84) Designated Contracting States:
DE FR GB SE

(71) Applicant: DANA CORPORATION
4500 Dorr Street
Toledo, OH 43615(US)

(72) Inventor: Joyner, Robert G.
915 Waybridge Road
Toledo, OH 43612(US)
Inventor: Watson, Rick D.
2679 Thunderbird Trail
Lambertville, MI 48144(US)

(74) Representative: Cheyne, John Robert
Alexander Mackenzie et al
HASELTINE LAKE & CO. Hazlitt House 28,
Southampton Buildings Chancery Lane
London WC2A 1AT(GB)

(54) Transmission output assemly.

(57) An output assembly for a transmission range box (10) includes a hollow cylindrical output tube (30), having internal splines. (30b) formed on the inner surface thereof, and a yoke shaft (31), having a solid cylindrical shaft portion with external splines (31a) formed on the outer surface thereof. The yoke shaft (31) is connected to the output tube (30) by inserting the male splined shaft portion within the female splined tube. Thus, the yoke shaft (31) rotates with the output tube (30), while being axially movable relative thereto. Such axial movement is designed to accommodate variations in the physical distance between the range box (10) and the next component of the drive train of the vehicle, such as a differential, without having to provide a slip yoke structure on the drive shaft connected to the yoke shaft. A seal (34) may be provided to engage the outer surface of either the cutput tube (30) or the end yoke (31}.

FIG. 2

EP 0 420 392 A2

## TRANSMISSION OUTPUT ASSEMBLY

### BACKGROUND OF THE INVENTION

This invention relates in general to vehicle transmission structures and in particular to an improved output assembly for such a transmission.

In most vehicles, a transmission is provided in the drive train between the engine and the driven wheels. As is well known, the transmission includes a plurality of gears which are selectively engaged to provide a plurality of speed reduction gear ratios between the input and the output of the transmission. A control member within the transmission is moved by a driver of the vehicle throughout a plurality of gear ratio positions for selecting the desired speed reduction. As a result, acceleration and deceleration of the vehicle can be achieved in a smooth and efficient manner.

Many transmissions provide three to five gear ratios for use in accelerating the vehicle in a forward direction. Although transmissions having greater numbers of gear ratios are known, they are rather complicated in structure and expensive. In order to obtain a greater number of gear ratios without the complexity and expense of these larger transmissions, a smaller transmission is often operated in conjunction with an auxiliary gear box, commonly referred to as a range box. Typically, the range box is capable of providing two additional gear ratios, generally designated as high range and low range. When combined with the main transmission, the range box effectively doubles the number of available gear ratios. Thus, the combination of the main transmission with the range box provides a large number of gear ratios at a relatively small cost.

The range box is typically mounted on the rear end of a housing for the transmission. The range box has an input member which is directly connected to the output shaft of the transmission. The range box also has an output member which is connected to the drive train of the vehicle. In the past, the output member of the range box has been formed by a male splined shaft having an end yoke mounted thereon. The end yoke was secured to the shaft for rotation therewith in such a manner that relative axial movement therebetween was prohibited. The end yoke, in turn, was connected through a drive shaft to the next component of the drive train of the vehicle, such as a differential, for example.

In practice, it has been found that the physical distance between the range box and the differential varies somewhat during use of the vehicle. This is particularly true when this distance (which is the length of the drive shaft) is relatively long. For example, when the size of the vehicle requires the use of a drive shaft having a length of approximately one hundred inches, axial length variations of approximately one and one-half inches may occur during use. To accommodate this, the drive shaft has previously been formed having a slip yoke structure at one end thereof. The slip yoke structure is formed by mounting a female splined yoke onto a male splined end portion of a drive shaft tube. The splined connection between the yoke and the tube permits limited relative axial movement, while providing a rotational driving connection therebetween. Thus, as the vehicle is operated, the splined connection permits the effective length of the drive shaft to vary with the physical distance between the range box and the differential.

Although the above-described structure has been found to operate satisfactorily, several drawbacks have been noted. First, the combined weight of the solid male splined shaft and end yoke of the range box, together with the slip yoke structure at the end of the drive shaft, exerts a downwardly directed load on the output shaft of the transmission. This load tends to lower the natural resonant frequency of the entire drive train system, making it more susceptible to objectionable noise and vibration. Additionally, the slip yoke structure on the drive shaft adds cost and complexity to the system. Thus, it would be desirable to provide an improved output assembly for a transmission or range box which avoids these drawbacks.

### SUMMARY OF THE INVENTION

This invention relates to an improved output assembly for a transmission range box adapted to be connected to a vehicle drive shaft. The output assembly includes a hollow cylindrical tube having internal or female splines formed on the inner surface thereof. The output assembly further includes a yoke shaft having a solid cylindrical shaft portion with external or male splines formed on the outer surface thereof. The yoke shaft is connected to the output tube by inserting the male splined shaft portion within the female splined tube. Thus, the yoke shaft rotates with the output tube, while being axially movable relative thereto. Such axial movement is designed to accommodate variations in the physical distance between the range box and the next component of the drive train of the vehicle, such as differential, without having to provide a slip yoke structure on the drive shaft connected to the yoke shaft. Rather, a simple fixed length drive shaft may be used having conventional tube yokes secured thereto. A seal may be provided to engage the outer surface of either the output tube or the yoke shaft.

It is an object of this invention to provide an improved range box/drive shaft structure for use with a vehicle transmission.

It is another object of this invention to provide such a range box/drive shaft structure which is simple and inexpensive in construction.

Other objects and advantages of this invention will become apparent to those skilled in the art from the following detailed description of the preferred embodiments, when read in light of the accompanying drawings.

### BRIEF DESCRIPTION OF THE DRAWINGS

Fig. 1 is a sectional elevational view of a prior art range box for a vehicle transmission.

Fig. 2 is a sectional elevational view of an improved range box in accordance with this invention.

Fig. 3 is a sectional elevational view of an alternate structure for a range box.

### DETAILED DESCRIPTION OF THE PREFERRED EMBODIMENTS

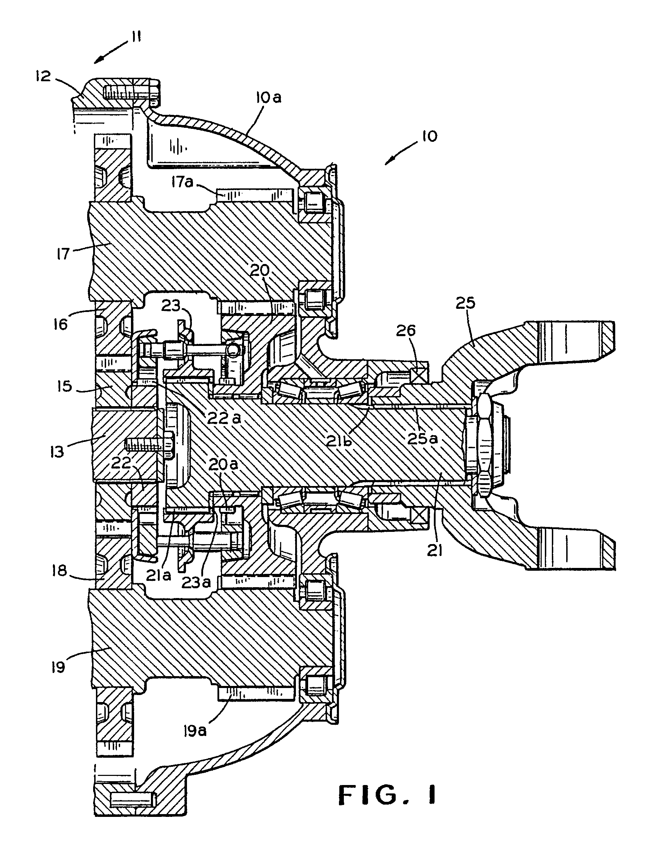

Referring now to the drawings, there is illustrated in Fig. 1 a prior art range box, indicated generally at 10, for a vehicle transmission. The rear end portion of the transmission is indicated generally at 11. The transmission 11 is conventional in the art and forms no part of this invention. Thus, only the rear portion 11 thereof, which is helpful in understanding the operation of this invention, is illustrated in the drawings. The transmission 11 is contained within a housing 12 and includes a rotatable main shaft 13, which functions as an output shaft of the transmission 11. The main shaft 13 is rotatably driven by an engine (not shown) by means of an input shaft (not shown) of the transmission 11 and a plurality of transmission gears (not shown). As is well known, the engine rotates the input shaft of the transmission. The transmission gears provide a plurality of selectable speed reduction gear ratios between the input and output shafts of the transmission.

A low range gear 15 is splined onto the end of the main shaft 13 for rotation therewith. The low range gear meshes with a gear 16 splined onto a first countershaft 17 and with a gear 18 splined onto a second countershaft 19. The first and second countershafts 17 and 19 are respectively supported for rotation within the range box 10 by conventional bearings. The first countershaft 17 has a plurality of gear teeth 17a formed thereon, while the second countershaft 19 has a plurality of gear teeth 19a formed thereon. The gear teeth 17a and 19a mesh with a low drive gear 20 having a plurality of teeth 20a formed thereon. The low drive gear 20 is rotatably supported on an output shaft 21 of the range box 10 by means of conventional bearings. One end of the output shaft 21 has a plurality of external splines 21a formed thereon for a purpose which will be described below.

A high range gear 22 is also splined onto the end of the main shaft 13 for rotation therewith. The high range gear 22 has a plurality of teeth 22a formed thereon. A clutch collar 23 is mounted on the splined end of the output shaft 21 for rotation therewith. The collar 23 has a plurality of internal splines 23a which cooperate with the external splines 21a on the output shaft 21 so as to rotate therewith. The collar 23 is axially movable from a neutral position (illustrated in Fig. 1) to a first gear engaging position (toward the right in Fig. 1). In this first or low range position, the splines on the collar 23 engage the teeth 20a formed on the low drive gear 20, thereby providing a driving connection between the low drive gear 20 and the output shaft 21. Similarly, the collar 23 is axially movable to a second gear engaging or high range position (toward the left in Fig. 1), wherein the splines on the collar 23 engage the teeth 22a formed on the high drive gear 22. Consequently, a driving connection is provided between the high range gear 22 and the output shaft 21. Any conventional means (not shown) may be provided for selectively moving the collar 23 between the neutral, low range, and high range positions.

The output shaft 21 is supported for rotation within an aperture formed through a housing 10a of the range box by conventional bearings. The output shaft 21 is shaped in the form of a solid cylindrical member. A second plurality of external splines 21b are formed on the outer surface of the output member 21 at the opposite end from the first plurality of splines 21a. A conventional end yoke 25 is connected to the output member 21 for rotation therewith. The end yoke 25 includes an aperture having a plurality of internal splines 25a formed therein. When the end yoke 25 is mounted on the output member 21, the internal end yoke splines 25a cooperate with the external output member splines 21b such that the end yoke 25 rotates with the output member 21. A seal 26 is provided within an aperture formed through the range box housing 10a which seats on an outer cylindrical surface of the end yoke 25. The seal 26 prevents lubricant from escaping from the range box 10 and dirt from entering therein. It will be appreciated that the end yoke 25 rotates within the seal 26 but does not move axially relative thereto.

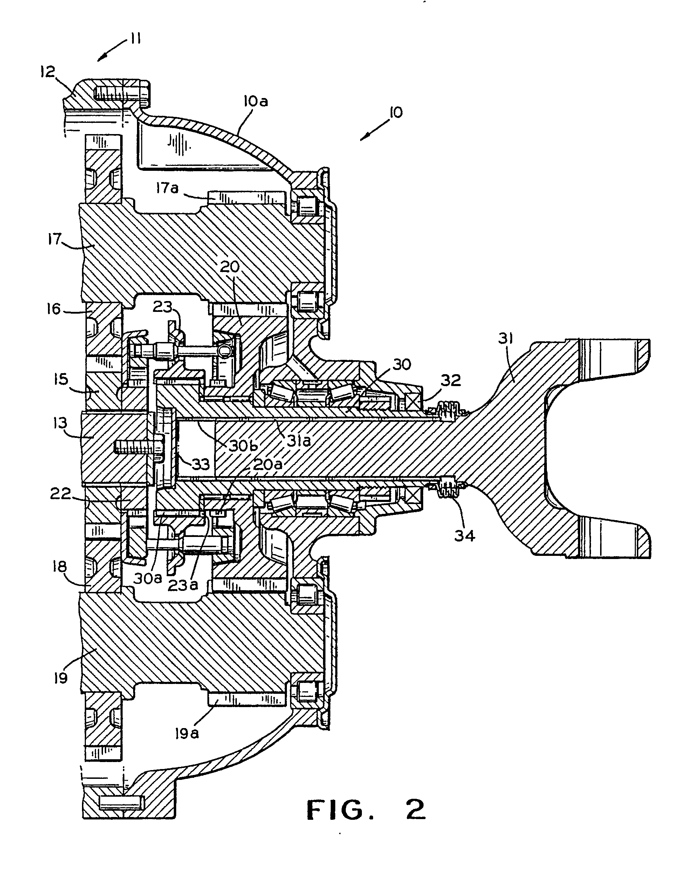

Fig. 2 illustrates a first embodiment of this invention. Most of the structure of the range box 10 illustrated in Fig. 2 is identical to that shown in Fig. 1, and like reference numerals are used to indicate similar components. In this invention, however, the solid cylindrical output shaft 21 is replaced by a hollow cylindrical output tube 30. The output tube 30 is supported for rotation within the housing 10a by conventional bearings. A plurality of external splines 30a are formed at one end of the output tube 30 for engaging and supporting the clutch collar 23 for axial movement between the neutral, low range, and high range positions as described above.

The inner cylindrical surface of the output tube 30 has a plurality of internal splines 30b formed thereon. A yoke shaft 31 is provided with a cylindrical end portion which extends within the output tube 30. The end portion of the yoke shaft 31 has a plurality of external splines 31a formed thereon which cooperate with the internal splines 30b of the output tube 30. Thus, the yoke shaft 31 is rotatably driven by the output tube 30 and is axially movable relative thereto.

A seal 32 is provided within an aperture formed through the range box housing 10a. The seal 32 seats on an outer cylindrical surface of the output tube 30. The seal 32 functions similarly to the seal 26 described above, in that the output tube 30 rotates within the seal 32 but does not move axially relative thereto. However, because the seal 32 seats on the output tube 30 and not on the yoke shaft 31, it is possible that some leakage might occur through the splined connection between the output tube 30 and the yoke shaft 31. To prevent this, a sealing plate 33 is pressed into a recessed area 30C formed on the end of the output tube 30 adjacent to the main shaft 13. The sealing plate 33 prevents leakage through the interior of the output shaft 30, while the seal 32 prevents leakage about the exterior thereof. Also, a conventional flexible boot 34 is connected between the output tube 30 and the yoke shaft 31 to prevent contaminants from entering into the splined connection and to retain lubricant therein.

As previously mentioned, the structure thus far described permits axial movement of the yoke shaft 31 relative to the output tube 30. Such axial movement is designed to accommodate variations in the physical distance between the range box 10 and the next component of the drive train of the vehicle (not shown), as described in detail above, without having to provide a slip yoke structure on a drive shaft (not shown) connected to the yoke shaft 31. Rather, a simple fixed length drive shaft may be used having conventional tube yokes secured thereto. The overall structure, therefore, is lighter and less complicated than previous structures, as discussed above.

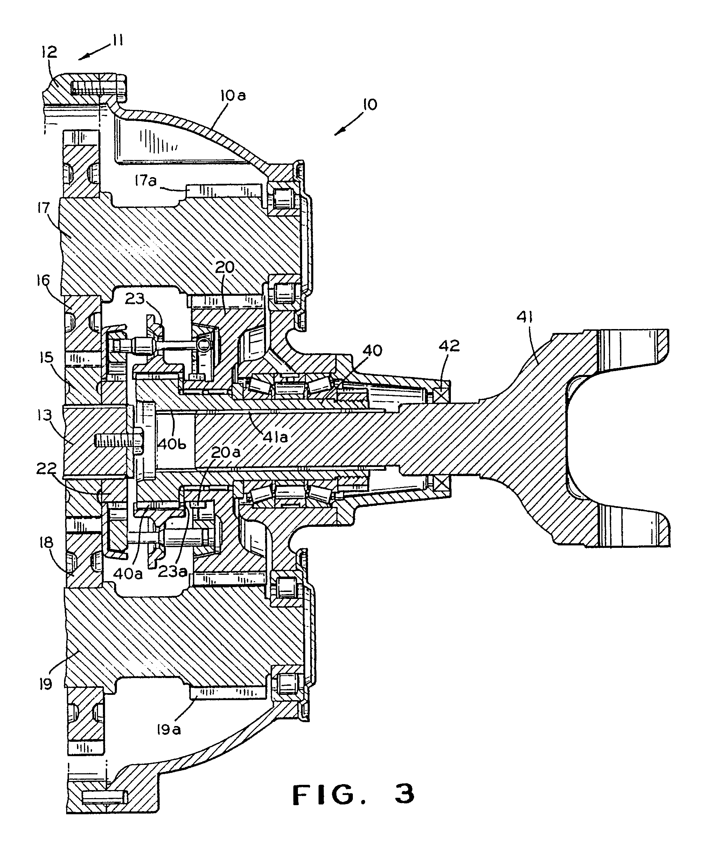

Fig. 3 illustrates a second embodiment of this invention. As with Fig. 2, most of the structure of the range box 10 illustrated in Fig. 2 is identical to that shown in Fig. 1, and like reference numerals are used to indicate similar components. In this embodiment, a hollow cylindrical output tube 40 is also supported for rotation within the housing 10a by conventional bearings. A plurality of external splines 40a are formed at one end of the output tube 40 for engaging and supporting the clutch collar 23 for axial movement between the neutral, low range, and high range positions as described above.

The inner cylindrical surface of the output tube 40 has a plurality of internal splines 40b formed thereon. A yoke shaft 41 is provided with a cylindrical end portion which extends within the output tube 40. The end portion of the yoke shaft 41 has a plurality of external splines 41a formed thereon which cooperate with the internal splines 40b of the output tube 40. Thus, the yoke shaft 41 is rotatably driven by the output tube 40 and is axially movable relative thereto.

A seal 42 is provided within an aperture formed through the range box housing 10a. In contrast to Fig. 2, the seal 42 seats on an outer cylindrical surface formed directly on the yoke shaft 41. Consequently, the seal 42 must seal against a surface which not only rotates, but also moves axially. However, by seating the seal 42 directly on the yoke shaft 41, the need for a sealing plate, such as shown at 33 in Fig. 2, is obviated. The single seal 42 prevents leakage both through the interior of the outpt shaft 40 and about the exterior thereof.

In accordance with the provisions of the patent statutes, the principle and mode of operation of this invention have been explained in its preferred embodiments. However, it must be understood that this invention may be practiced otherwise than as specifically explained and illustrated without departing from its spirit or scope.

**Claims**

1. An output assembly for a transmission range box comprising:
a hollow output tube connected to the transmission, said output tube having an internally splined portion;
a yoke shaft having an externally splined end portion extending into said output tube and cooperating with said internally splined portion so as to permit axial movement of said yoke shaft relative to said output tube while preventing relative rotational movement.

2. The invention defined in Claim 1 further including a seal provided within an aperture formed through a housing of the range box, said seal seating on an outer cylindrical surface of said output tube to prevent leakage about the exterior thereof.

3. The invention defined in Claim 2 wherein a recessed area is formed within said output tube, and further including a sealing plate disposed within said recessed area to prevent leakage through the interior of said output tube.

4. The invention defined in Claim 1 further including a seal provided within an aperture formed through a housing of the range box, said seal seating on an outer cylindrical surface of said yoke shaft to prevent from said housing.

FIG. 1

FIG. 2

FIG. 3